# EUROPÄISCHE PATENTSCHRIFT

(11) **EP 0 769 649 B1**
(45) Veröffentlichungstag und Bekanntmachung des Hinweises auf die Patenterteilung: **05.06.2002**
(21) Anmeldenummer: 96116460.5
(22) Anmeldetag: 15.10.1996
(51) Int. Cl.: F16L 33/04, F16L 21/06, F16L 23/08, F16L 21/02

(54) **Rohrverbindung mit Spannschelle**
Pipe joint made with band clamps
Connexion de tuyaux utilisant des colliers de serrage

(30) Priorität: 19.10.1995 DE 29516437 U
(43) Veröffentlichungstag der Anmeldung: 23.04.1997
(73) Patentinhaber: Hans Oetiker AG Maschinen- und Apparatefabrik, 8812 Horgen (CH)
(72) Erfinder: Allert, Kurt, 78727 Oberndorf (DE)
(74) Vertreter: Grosse, Rainer, Dipl.-Ing.

(56) Entgegenhaltungen:
- EP-A- 0 597 805
- WO-A-95/11403
- DE-A- 2 207 187
- GB-A- 2 022 680
- US-A- 3 477 106
- US-A- 3 964 773

## Beschreibung

Die Erfindung betrifft eine Rohrverbindung mit zwei axial in eine Rohrmuffe eingesteckten Rohren, insbesondere Abwasserrohren.

Rohrverbindungen der hier angesprochenen Art sind bekannt. Sie weisen Spannschellen auf, die um die Rohre herumgelegt werden, um auf die Rohre aufgeschobene Schläuche oder dergleichen zu sichern. Die bekannte Spannschelle weist einen bandförmigen Spannabschnitt und eine der Verbindung der Endbereiche des Spannabschnitts dienende Spannvorrichtung auf, die jeweils ein zum zugehörigen Spannabschnittsende abgewinkelt verlaufenden Befestigungsflansch aufweist. Die Befestigungsflansche der bekannten Spannschellen sind dadurch gebildet, daß vom Spannabschnittsende jeweils ein Abschnitt des bandförmigen Materials radial abgebogen wird. Jeweils zwei radial abgebogene Befestigungsflansche stehen sich mit Abstand gegenüber. Sie lassen sich mittels eines Spannbauteils aufeinander zu spannen, wodurch sich der Durchmesser des Spannabschnitts verkleinert, so daß sich die Spannschelle fest um einen entsprechenden Gegenstand legt. Die Spannkräfte der bekannten Spannschellen sind begrenzt, so daß für bestimmte Aufgaben eine Unterdimensionierung vorliegt und ein ungewolltes Lösen der Rohrverbindung nicht mit Sicherheit ausgeschlossen werden kann.

Aus der US 39 64 773 geht eine Rohrverbindung hervor, bei der zwei stirnseitig aneinander anstoßende Rohre mittels einer ein zweiteiliges Spannband aufweisenden Spannschelle miteinander verbunden sind. Die Spannbandabschnitte sind derart geformt, daß sie umlaufende Verdickungen an den Rohrenden übergreifen. Mit Hilfe einer Schraube kann der Abstand zwischen den beiden freien Enden der Spannbandabschnitte verkleinert werden, so dass aufgrund der Geometrie der Spannbandabschnitte die Spannkräfte auf die Rohrenden wirken, wodurch die Rohre stirnseitig aneinander gedrückt werden.

Aus der US 34 77 106 geht eine Schlauchschelle mit einem Spannband hervor, bei der auf das Spannband eine Klammer aufgeklipst ist, die in Bezug auf die Rohrmitte radial nach innen gerichtete Zinken aufweist, die im montierten Zustand der Schlauchschelle zur Aufnahme des Endbereichs eines auf ein freies Rohrende aufgeschobenen Schlauchs dient.

Der Erfindung liegt die Aufgabe zugrunde, eine Rohrverbindung der eingangs genannten Art anzugeben, bei der ein selbständiges, ungewolltes Lösen praktisch ausgeschlossen werden kann.

Diese Aufgabe wird erfindungsgemäß dadurch gelöst, daß auf jedem Rohrende eine Spannschelle mit einem bandförmigen Spannabschnitt und einer der Verbindung der Endbereiche des Spannabschnitts dienenden Spannvorrichtung klemmend befestigt ist, wobei am Spannabschnitt im wesentlichen axial verlaufende Halteklauen angeordnet sind, die Hintergriffskanten der Rohrmuffe axial hintergreifen, und wobei die Spannvorrichtung jeweils einen zum zugehörigen Spannabschnittsende abgewinkelt verlaufenden Befestigungsflansch aufweist, an den beiden Befestigungsflanschen ein Spannbauteil angreift und von den beiden Seitenrändern jedes Befestigungsflansches jeweils eine Versteifungseckverbindung ausgeht, die mit dem zugeordneten Seitenrand des angrenzenden Spannabschnittsendbereichs verbunden ist. Die Versteifungseckverbindungen sorgen somit dafür, daß eine hochfeste Verbindung zwischen dem jeweiligen Spannabschnittsende und dem Befestigungsflansch vorliegt, mithin durch am Befestigungsflansch angreifende Spannkräfte ein Verbiegen des abgewinkelt zum Spannabschnittsende verlaufenden Befestigungsflansches weitgehend verhindert wird, da die jeweils von den beiden Seitenrändern des Befestigungsflansches ausgehenden, zu den zugehörigen Spannabschnittsendbereichen verlaufenden Versteifungseckverbindungen hochbelastbare Strukturen gebildet werden. Mithin kann das Spannbauteil sehr große Kräfte auf die Befestigungsflansche ausüben, wobei die Befestigungsflansche nicht oder nur unwesentlich nachgeben und daher die volle Kraft auf den Spannabschnitt übertragen wird. Die Folge ist, daß mittels der erfindungsgemäßen Spannschelle ein hoher Anpreßdruck auf den umgriffenen Gegenstand ausübbar ist. Die am Spannabschnitt im wesentlichen axial verlaufenden Halteklauen sind vorzugsweise einstückig mit dem Spannabschnitt ausgebildet und dienen dazu, die relative Lage des Rohres, um die die Spannschelle gelegt ist und das mittels der Rohrmuffe mit einem weiteren Rohr verbunden wird, und Rohrmuffe zu sichern. Wird zum Beispiel ein Überdruck in den verbundenen Rohren erzeugt, so verhindern die Halteklauen, daß sich die Rohrenden in der Rohrmuffe auseinander bewegen.

Nach einer Weiterbildung der Erfindung ist vorgesehen, daß die Versteifungseckverbindungen einstückig mit dem zugeordneten Befestigungsflansch ausgebildet sind. Überdies kann vorgesehen sein, daß die Versteifungseckverbindungen einstückig mit dem zugeordneten Spannabschnittsendbereich ausgebildet sind. Durch die einstückige Ausgestaltung ist einerseits ein sehr einfacher Aufbau realisiert. Vorzugsweise erfolgt die Erstellung durch Umformungsvorgänge, das heißt, die gesamte Spannschelle wird aus Blechmaterial gestanzt und die erfindungsgemäße Spannvorrichtung dabei in einem oder mehreren Arbeitsgängen mit erstellt. Andererseits wird aufgrund der Einstückigkeit eine besondere mechanische Festigkeit der mit Versteifungseckverbindungen versehenen Befestigungsflansche erzielt, da durch die Umformungsvorgänge (Stauchen, Strecken und so weiter) taschenähnliche Gebilde erzeugt werden, die in sich biege- und verwindungssteif sind.

Ferner ist es vorteilhaft, wenn das Spannbauteil eine Gewindeschraube ist, deren Gewindeschaft jeweils einen Aufnahmedurchbruch des zugehörigen Befestigungsflansches durchsetzt, deren Kopf sich an einem der Befestigungsflansche abstützt und deren Gewindeschaft in eine sich am anderen der Befestigungsflansche abstützenden Gewindemutter eingeschraubt ist. Hierdurch kann auf einfache Weise mit preisgünstigen Massenbauteilen eine Spanneinrichtung mit hohen Zugkräften realisiert werden.

Nach einer Weiterbildung der Erfindung ist vorgesehen, daß der Spannabschnitt aus mehreren, vorzugsweise aus zwei, Teilstücken zusammengesetzt ist, die mittels Formschlußgliedern aneinander beweglich sowie aushängbar gehalten sind. Diese Ausgestaltung hat den Vorteil, daß beim Anlegen und Abnehmen einer Spannschelle, beispielsweise bei der Montage an einem Rohr beziehungsweise der Demontage von diesem Rohr die Spannabschnittsenden nicht soweit auseinandergebogen werden müssen, um den Durchmesser des Rohres zu passieren (wie dies bei bekannten Spannschellen der Fall ist), sondern es ist möglich, diese aufgrund ihrer beweglich aneinander gelagerten Formschlußglieder ohne elastische oder plastische Verformung um das Rohr herum zu legen beziehungsweise von dem Rohr abzunehmen. Von besonderem Vorteil ist ferner, daß die Spannabschnitte aushängbar aneinandergehalten sind, das heißt, sie können in entsprechenden Teilabschnitten gefertigt werden, so daß nicht bereits ein gesamter Umfang (360°) der Spannschelle mit entsprechendem Aufwand gefertigt werden muß, sondern kleinere Abschnitte, beispielsweise Spannschellenhälften, die einfachere Werkzeuge erfordern und damit kostengünstiger sind. Die Möglichkeit, mittels der Formschlußglieder die Teilstücke einerseits beweglich aneinander zu lagern und andererseits sie miteinander verbinden zu können beziehungsweise sie voneinander durch Aushängen zu trennen, stellt eine vorteilhafte Doppelfunktion dar.

Nach einer Weiterbildung der Erfindung ist vorgesehen, daß das eine der Formschlußglieder von einem Durchbruch in einem der Teilstücke und das andere der Formschlußglieder von einem in den Durchbruch einhakbaren Haltevorsprung des anderen der Teilstücke gebildet wird. Insbesondere ist der Haltevorsprung einstückig an dem zugeordneten Teilstück ausgebildet. Ferner ist bevorzugt der Durchbruch von einem sich in Längsrichtung des Spannabschnitts erstreckenden Langloch gebildet. Insbesondere ist vorgesehen, daß der Haltevorsprung von einem im Grundriß T-förmigen Endbereich des entsprechenden Teilstücks gebildet ist. Hierdurch wird es möglich, den T-Schenkel des Haltevorsprungs durch entsprechendes Verdrehen der beiden Teilstücke zueinander in das Langloch einzustecken und dann -durch Rückdrehung der beiden Teilstücke in die Spannebeneden Formschluß herzustellen. Das Langloch sowie die Ausbildung des T-förmigen Grundrisses des Endbereiches des Teilstücks erfordern keine zusätzlichen Bauteile oder dergleichen, sondern können durch einfache Stanzvorgänge realisiert werden.

In bevorzugter Ausführungsform gehen die vorzugsweise einstückig mit dem Spannabschnitt ausgebildeten Halteklauen nur von einer Seite des Spannabschnitts aus.

Die Zeichnungen veranschaulichen die Erfindung anhand eines Ausführungsbeispiels und zwar zeigen:
- Figur 1: eine perspektivische Ansicht einer Spannschelle,
- Figur 2: die Spannschelle der Figur 1 im Bereich einer Spannvorrichtung,
- Figur 3: Spannabschnittsenden mit Formschlußgliedern der Spannschelle der Figur 1,
- Figur 4: eine Darstellung gemäß Figur 3, jedoch im eingehängten Zustand und
- Figur 5: eine Rohrverbindung mit zwei Spannschellen gemäß Figur 1.

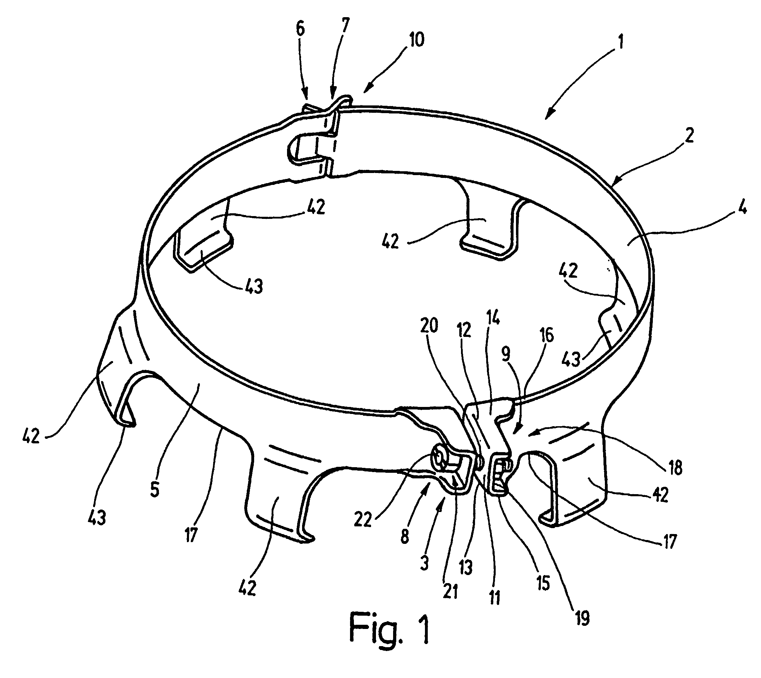

Die Figur 1 zeigt eine Spannschelle 1, die einen bandförmigen Spannabschnitt 2 und eine Spannvorrichtung 3 aufweist. Der Spannabschnitt ist unterteilt in zwei halbkreisförmige Teilstücke 4 und 5. Die beiden Teilstücke 4 und 5 sind mittels Formschlußgliedern 6, 7 relativ zueinander bewegbar sowie aushängbar aneinandergehalten. Die Spannvorrichtung 3 weist ein Spannbauteil 8 auf, mittels dem der freie Durchmesser des bandförmigen Spannabschnitts 2 einstellbar ist, so daß die Spannschelle fest um einen Gegenstand, beispielsweise um ein Rohr, spannbar ist. Die beiden, den Spannabschnitt 2 bildenden Teilstücke 4 und 5 sind hinsichtlich der Spannvorrichtung 3 und auch weiteren, nachstehend näher erklärten Ausbildungen identisch aufgebaut, so daß -der Einfachheit halber- nur auf eines der Teilstücke 4 beziehungsweise 5 eingegangen wird. Unterschiede bestehen allerdings hinsichtlich der Formschlußglieder 6 und 7, so daß diese nachstehend getrennt voneinander behandelt werden.

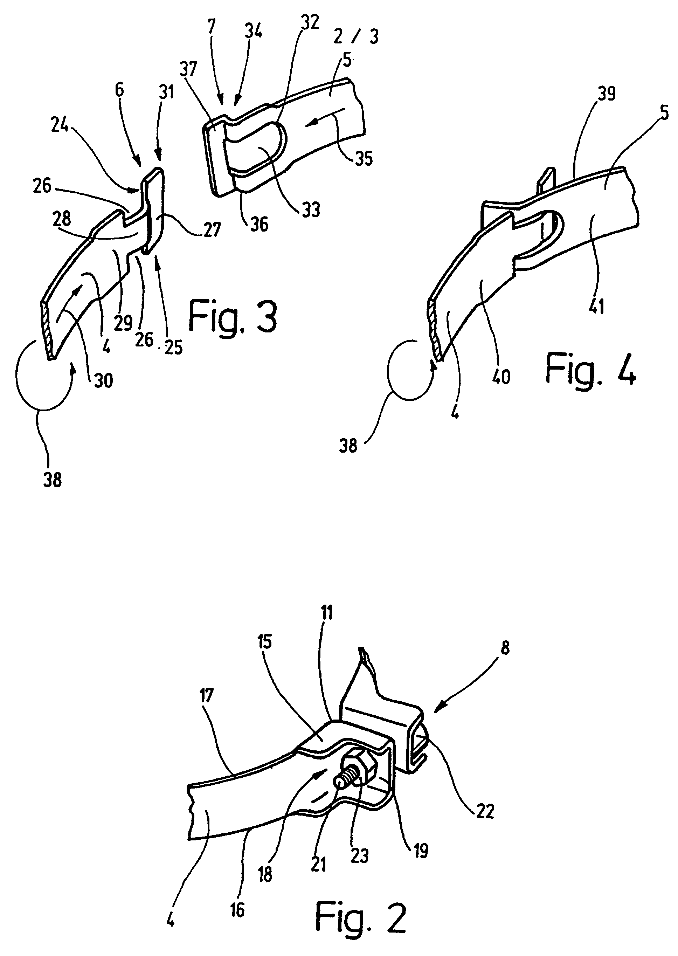

Jedes der Teilstücke 4, 5 weist ein erstes Spannabschnittsende 9 sowie ein zweites Spannabschnittsende 10 auf. Das Spannabschnittsende 9 ist der Spannvorrichtung 3 und das Spannabschnittsende 10 den Formschlußgliedern 6 beziehungsweise 7 zugeordnet. Am Spannabschnittsende 9 ist ein Befestigungsflansch 11 ausgebildet. Dieser ist radial vom Teilstück 4 einstückig abgewinkelt abgebogen und weist an seinen beiden Seitenrändern 12, 13 einstückig mit dem Befestigungsflansch 11 zusammenhängende, rechtwinklig von letzterem abgewinkelte Versteifungseckverbindungen 14, 15 auf, die -wiederum einstückig- mit den zugeordneten Seitenrändern 16 und 17 des Spannabschnittsendbereichs 18 verbunden sind. Die Innenseite 19 des Befestigungsflansches 11 liegt somit auf dem Grund einer taschenförmigen Struktur, die durch ein von den Versteifungseckverbindungen 14 und 15 sowie dem Befestigungsflansch 11 gebildeten U-Profil gebildet ist. Dieses U-Profil setzt sich im Bereich des Teilstücks 4 fort, wobei der dort liegende Spannabschnittsendbreich 18 den Grund des dort liegenden, quasi um die Ecke reichenden U-Profils bildet. Der Befestigungsflansch 11 wird von einem Aufnahmedurchbruch 20 durchsetzt. Die Spannvorrichtung 3 weist das Spannbauteil 8 auf, das von einer Gewindeschraube 21 gebildet wird, deren Schaft den Aufnahmedurchbruch 20 durchsetzt. Da -wie vorstehend erwähnt- der Spannabschnittsendbereich 18 des Teilstücks 4 entsprechend dem gleichen Bauteil des Teilstücks 5 ausgebildet ist, durchgreift der Schaft der Gewindeschraube 21 ebenfalls einen entsprechenden Durchbruch im Befestigungsflansch des Teilstücks 5, wobei sich der Kopf 22 an diesem Befestigungsflansch abstützt und der Befestigungsflansch 11 eine Gewindemutter 23 (siehe Figur 2) aufweist, die ihrerseits eine Abstützung am zugeordneten Befestigungsflansch 11 findet. Mithin kann durch Anziehen der Gewindeschraube 21 der Durchmesser der Spannschelle 1 variiert werden. Insbesondere kann vorgesehen sein, daß die Gewindemutter 23 in den Aufnahmedurchbruch 20 mit einem Befestigungsstutzen eingepreßt ist, so daß sie unverlierbar gehalten wird.

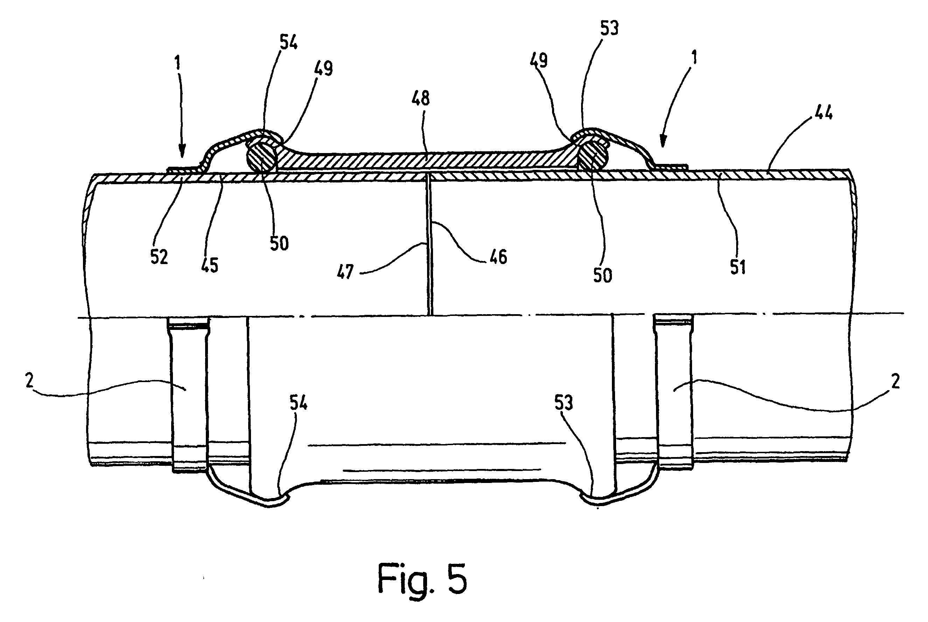

Im Bereich des zweiten Spannabschnittsendes 10 ist das bereits erwähnte Formschlußglied 6 ausgebildet. Dies besteht -insbesondere gemäß der Figuren 3 und 4- aus einem Haltevorsprung 24, der aufgrund eines T-förmigen Grundrisses des Endbereichs 25 des Teilstücks 4 gebildet ist. Vorzugsweise wird der Haltevorsprung 24 dadurch erzeugt, daß das bandförmige Teilstück 4 zwei einander gegenüberliegende, randoffene Ausnehmungen 26 erhält, die durch einen Stanzvorgang erzeugt werden. Insofern ist ein T-Schenkel 27 und eine Taille 28 realisiert, wobei die Taille 28 zwischen den beiden Ausnehmungen 26 liegt. Daran schließt sich -abgewandt vom Ende des Teilstücks 4- ein wiederum breiterer Bereich 29 des Spannabschnitts 2 an. Folgt man der Umfangsfläche in Richtung des Pfeiles 30 der Figur 3, so ist erkennbar, daß im Bereich des zweiten Spannabschnittsendes 10 eine Abkröpfung 31 vorliegt. Diese wird dadurch gebildet, daß -zum Ende hin- die Taille 28 nach außen hin abgewinkelt ist und dann -weiter dem Ende zu- entgegengesetzt gebogen verläuft, so daß die Ebene des T-Schenkels in etwa versetzt zur Ebene des Bereichs 29 des Teilstücks 4 liegt. Nach "außen" bedeutet in diesem Zusammenhang, weiter vom Mittelpunkt der insgesamt kreisförmig ausgebildeten Spannschelle 1 (vergleiche Figur 1) entfernt liegend.

Die Figur 3 zeigt ferner das Formschlußglied 7 des Teilstücks 5. Dies wird durch einen Durchbruch 32 gebildet, der als Langloch 33 ausgeführt ist. Die Längserstreckung des Langlochs 33 ist in Richtung der Längserstreckung des Teilstücks 5 orientiert. Ebenso wie beim Teilstück 4 liegt auch beim Teilstück 5 eine Abkröpfung vor, die mit 34 bezeichnet ist. Sie wird dadurch gebildet, daß -in Richtung auf das Ende des Teilstücks 4 zu (Pfeil 35)- das Teilstück nach außen hin abgewinkelt verläuft (Bereich 36) und dann wiederum eine Abwinklung in entgegengesetzter Richtung vorliegt, so daß ein Abschnitt 37 gebildet wird. Das Langloch 33 erstreckt sich bis zum Abschnitt 37, das heißt, es durchsetzt den Bereich 36 und den sich daran anschließenden Bereich des Teilstücks 5 (entgegen der Richtung des Pfeiles 35 betrachtet).

Der Figur 4 ist zu entnehmen, wie die beiden Teilstücke 4 und 5 mittels ihrer Formschlußglieder 6 und 7 beweglich durch Einhaken miteinander verbunden werden können. Hierzu wird das Teilstück 4 gemäß Pfeil 38 (Figur 3) um 90° gedreht, so daß der T-Schenkel 27 in das Langloch 33 eingeführt werden kann. Anschließend erfolgt eine Rückdrehung, so daß sich die Darstellung gemäß Figur 4 ergibt. Mithin durchgreift die Taille 28 das Langloch 33, und die Endbereiche des T-Schenkels 27 stützen sich auf der Außenseite 39 des Teilstücks 5 ab. Aufgrund der beiden Abkröpfungen 31 und 34 verlaufen die Innenseite 40 und 41 der Teilstücke 4 und 5 etwa fluchtend zueinander, das heißt, es wird eine optimale Anlage an ein zu umspannendes Bauteil realisiert. Das Trennen der beiden Teilstücke 4 und 5 erfolgt in entsprechend analoger, ebenfalls einfacher Weise, ebenso wie das Zusammenfügen der beiden Teile.

Der Figur 1 ist zu entnehmen, daß an beiden Teilstücken 4 und 5 im wesentlichen axial verlaufende Halteklauen 42 ausgebildet sind. Die Halteklauen 42 gehen von dem Seitenrand 17 der entsprechenden Teilstücke 4 und 5 aus, das heißt, sie liegen nur auf einer Seite der Spannschelle 1. Vorzugsweise sind sie gleichmäßig winkelverteilt an der Spannschelle 1 mit Abstand zueinander ausgebildet. Da die in der Figur 1 dargestellte Spannschelle 1 sechs Halteklauen 42 aufweist, ist zwischen jeweils benachbarten Halteklauen 42 ein Winkel von 60° ausgebildet. Jede Halteklaue 42 ist -an ihrem Endbereich- hakenförmig abgebogen, so daß dort jeweils eine Hintergriffsfläche 43 ausgebildet wird. Die Halteklauen 42 sind einstückig mit dem zugeordneten Teilstück 4 beziehungsweise 5 ausgebildet.

Die Figur 5 zeigt den Einsatz der Spannschelle 1. Gezeigt sind zwei Rohre 44 und 45, die axial mit ihren Enden 46 und 47 in eine Rohrmuffe 48 eingesteckt sind. Bei den Rohren 44 und 45 kann es sich beispielsweise um Abwasserrohre handeln. Die Rohrmuffe 48 weist im Bereich ihrer beiden Enden jeweils einen Aufnahme-Ringkanal 49 auf, in dem sich jeweils ein elastischer Dichtungsring 50 befindet. Dieser liegt straff an der Außenmantelfläche des jeweiligen Rohres 44 beziehungsweise 45 an. Auf die Endbereiche 51 und 52 der beiden Rohre 44 und 45 ist jeweils eine Spannschelle 1 aufgespannt, das heißt, mittels des angezogenen Spannbauteils 8 ist jede Spannschelle 1 auf dem entsprechenden Rohraußenumfang klemmend festgelegt. Die Halteklauen 42 der beiden Spannschellen 1 weisen aufeinander zu, wobei sie Hintergriffskanten 53 und 54 der Rohrmuffe 48 übergreifen. Diese Hintergriffskanten 53 und 54 werden durch ringwulstförmige Erhebungen der Rohrmuffe 48 gebildet, die aufgrund der Aufnahmeringkanäle 49 ausgebildet sind.

Aufgrund des Hintergriffs der Halteklauen 42 werden die beiden Rohre 44 und 45 axial unverschieblich mit der Rohrmuffe 48 verbunden, so daß ein sicherer Zusammenhalt -auch beispielsweise bei einem Überdruck in den Rohren 44 und 45- gewährleistet ist.

## Patentansprüche

1. Rohrverbindung mit zwei axial in eine Rohrmuffe (48) eingesteckten Rohren (44,45), insbesondere Abwasserrohren, **dadurch gekennzeichnet, daß** auf jedem Rohrende eine Spannschelle (1) mit einem bandförmigen Spannabschnitt (2) und einer der Verbindung der Endbereiche des Spannabschnitts (2) dienenden Spannvorrichtung (3) klemmend befestigt ist, wobei am Spannabschnitt (2) im wesentlichen axial verlaufende Halteklauen (42) angeordnet sind, die Hintergriffskanten (53,54) der Rohrmuffe (48) axial hintergreifen, und wobei die Spannvorrichtung (3) jeweils einen zum zugehörigen Spannabschnittsende (9) abgewinkelt verlaufenden Befestigungsflansch (11) aufweist, an den beiden Befestigungsflanschen (11) ein Spannbauteil (8) angreift und von den beiden Seitenrändern (12,13) jedes Befestigungsflansches (11) jeweils eine Versteifungseckverbindung (14,15) ausgeht, die mit dem zugeordneten Seitenrand (16,17) des angrenzenden Spannabschnittsendbereichs (18) verbunden ist.

2. Rohrverbindung nach Anspruch 1, **dadurch gekennzeichnet, daß** die Versteifungseckverbindungen (14, 15) einstückig mit dem ihnen zugeordneten Befestigungsflansch (11) ausgebildet sind.

3. Rohrverbindung nach einem der vorhergehenden Ansprüche, **dadurch gekennzeiahnet,** daß die Versteifungseckverbindungen (14,15) einstückig mit dem zugeordneten Spannabschnittsendbereich (18) ausgebildet sind.

4. Rohrverbindung nach einem der vorhergehenden Ansprüche, **dadurch gekennzeichnet, daß** das Spannbauteil (8) eine Gewindeschraube (21) ist, deren Gewindeschaft jeweils einen Aufnahmedurchbruch (20) des zugehörigen Befestigungsflansches (11) durchsetzt, deren Kopf (22) sich an einem der Befestigungsflansche (11) abstützt und deren Gewindeschaft in eine sich am anderen der Befestigungsflansche abstützenden Gewindemutter (23) eingeschraubt ist.

5. Rohrverbindung nach einem der vorhergehenden Ansprüche, **dadurch gekennzeichnet, daß** der Spannabschnitt (2) aus mehreren, vorzugsweise aus zwei, Teilstücken (4,5) zusammengesetzt ist, die mittels Formschlußgliedern (6,7) aneinander beweglich sowie aushängbar gehalten sind.

6. Rohrverbindung nach einem der vorhergehenden Ansprüche, **dadurch gekennzeichnet, daß** das eine der Formschlußglieder (6,7) einen Durchbruch (32) in einem der Teilstücke (4,5) und das andere der Formschlußglieder (7,6) von einem in den Durchbruch (32) einhakbaren Haltevorsprung (24) des anderen der Teilstücke (5,4) gebildet ist.

7. Rohrverbindung nach einem der vorhergehenden Ansprüche, **dadurch gekennzeichnet, daß** der Haltevorsprung (24) einstückig an dem zugeordneten Teilstück (4, 5) ausgebildet ist.

8. Rohrverbindung nach einem der vorhergehenden Ansprüche, **dadurch gekennzeichnet, daß** der Durchbruch (32) ein sich in Längsrichtung des Spannabschnitts (5) erstreckendes Langloch (33) ist.

9. Rohrverbindung nach einem der vorhergehenden Ansprüche, **dadurch gekennzeichnet, daß** der Haltevorsprung (24) von einem im Grundriß T-förmigen Endbereich (25) des Teilstücks (4) gebildet ist.

10. Rohrverbindung nach einem der vorhergehenden Ansprüche, **dadurch gekennzeichnet, daß** die Halteklauen (42) einstückig mit dem Spannabschnitt (2) ausgebildet sind.

11. Rohrverbindung nach einem der vorhergehenden Ansprüche, **dadurah gekennzeichnet,** daß die Halteklauen (42) von nur einer Seite des Spannabschnitts (2) ausgehen.

## Claims

1. Pipe joint with two pipes (44, 45) which are inserted axially into a connecting sleeve (48), in particular sewage pipes, **characterised in that** a band clamp (1) is secured in a cramped manner on each pipe end, said band clamp having a band-shaped tensioning portion (2) and a tensioning device (3) which serves for connecting the end regions of the tensioning portion (2), substantially axially extending retaining claws (42) being disposed on the tensioning portion (2), the rear gripping edges (53, 54) of the connecting sleeve (48) grip axially from behind, and the tensioning device (3) having one attachment flange (11) respectively which extends angled-over towards the associated tensioning portion end (9), a tensioning component (8) engages on both attachment flanges (11) and one reinforcing corner connection (14, 15) respectively issues from both side edges (12, 13) of each attachment flange (11), said connection being connected to the assigned side edge (16, 17) of the adjoining tensioning portion end region (18).

2. Pipe joint according to claim 1, **characterised in that** the reinforcing edge connections (14, 15) are configured in one-piece with their assigned attachment flange (11).

3. Pipe joint according to one of the preceding claims, **characterised in that** the reinforcing corner connections (14, 15) are configured in one-piece with the assigned tensioning portion end region (18).

4. Pipe joint according to one of the preceding claims, **characterised in that** the tensioning component (8) is a threaded screw (21), the threaded shaft of which penetrates respectively one receiving opening (20) of the associated attachment flange (11), the head (22) of which screw is supported on one of the attachment flanges (11) and the threaded shaft of which screw is screwed into a threaded nut (23) which is supported on the other of the attachment flanges.

5. Pipe joint according to one of the preceding claims, **characterised in that** the tensioning portion (2) is composed of a plurality of sections, preferably two sections (4, 5) which are retained against each other so as to be able to be moved and dismantled by means of interlocking members (6, 7).

6. Pipe joint according to one of the preceding claims, **characterised in that** one of the interlocking members (6, 7) is formed by an opening (32) in one of the sections (4, 5) and the other of the interlocking members (7, 6) is formed by a retaining projection (24) of the other of the sections (5, 4), which projection can be hooked into the opening (32).

7. Pipe joint according to one of the preceding claims, **characterised in that** the retaining projection (24) is configured in one-piece on the assigned section (4, 5).

8. Pipe joint according to one of the preceding claims, **characterised in that** the opening (32) is a slot (33) which extends in the longitudinal direction of the tensioning portion (5).

9. Pipe joint according to one of the preceding claims, **characterised in that** the retaining projection (24) is formed by an end region (25) of the section (4) which is T-shaped in plan view.

10. Pipe joint according to one of the preceding claims, **characterised in that** the retaining claws (42) are configured in one-piece with the tensioning portion (2).

11. Pipe joint according to one of the preceding claims, **characterised in that the** retaining claws (42) issue from only one side of the tensioning portion (2).

## Revendications

1. Liaison de tubes, par deux tubes (44, 45) emmanchés axialement dans un manchon tubulaire (48), en particulier pour des tubes d'eaux usées,
**caractérisée en ce que**
- sur l'extrémité de chaque tube est fixé par serrage un collier de serrage (1) composé d'une partie de serrage (2) en forme de bande et d'un dispositif de serrage (3) reliant les extrémités de la partie de serrage (2),
- sur la partie de serrage (2) sont disposées, essentiellement en direction axiale, des griffes de maintien (42), qui sont en prise axiale de l'arrière avec les bords de prise (53, 54) du manchon (48),
- le dispositif de serrage (3) comporte, à chaque extrémité (9) de la partie de serrage et coudée par rapport à celle-ci, une bride de fixation (11),
- un composant de serrage (8) est en prise avec les deux brides de fixation (11) et des deux bords latéraux (12, 13) de chaque bride de fixation (11) part une liaison angulaire de raidissement (14, 15) raccordée au bord latéral correspondant (16, 17) de l'extrémité voisine de la partie de serrage.

2. Liaison des tubes selon la revendication 1,
**caractérisée en ce que**
les liaison angulaires de raidissement (14, 15) sont monoblocs avec la bride de fixation (11) qui leur est associée.

3. Liaison des tubes selon l'une des revendications précédentes,
**caractérisée en ce que**
les liaisons angulaires de raidissement (14, 15) sont monoblocs avec la zone d'extrémité (18) de la partie de serrage qui leur est associée.

4. Liaison des tubes selon l'une des revendications précédentes,
**caractérisée en ce que**
le composant de serrage (8) est une vis filetée (21) dont la tige traverse l'ouverture de passage (20) de chaque bride de fixation correspondante (11) et dont la tête (22) s'appuie sur une de ces brides (11) tandis que la tige est vissée dans un écrou (23) en appui sur l'autre bride.

5. Liaison des tubes selon l'une des revendications précédentes,
**caractérisée en ce que**
la partie de serrage (2) est composée de plusieurs, de préférence deux pièces élémentaires (4, 5) qui sont réunies par des organes (6, 7) de verrouillage par combinaison de formes, les pièces étant mobiles l'une par rapport à l'autre et pouvant s'accrocher l'une à l'autre.

6. Liaison des tubes selon l'une des revendications précédentes,
**caractérisée en ce qu'**
un des organes (6, 7) de verrouillage par combinaison de formes est constitué par une ouverture (32) découpée dans une des pièces élémentaires (4, 5) tandis que l'autre organe de verrouillage (7, 6) est constitué par une saillie de maintien (24), de l'autre pièce élémentaire (5, 4), saillie venant s'accrocher dans l'ouverture (32).

7. Liaison des tubes selon l'une des revendications précédentes,
**caractérisée en ce que**
la saillie de maintien (24) est monobloc avec la pièce élémentaire associée (4, 5).

8. Liaison des tubes selon l'une des revendications précédentes,
**caractérisée en ce que**
l'ouverture (32) est un trou oblong (33) orienté selon la direction longitudinale de la partie de serrage (5).

9. Liaison des tubes selon l'une des revendications précédentes,
**caractérisée en ce que**
la saillie de maintien (24) est constituée par l'extrémité (25) de la pièce élémentaire (4) découpée en T vu en plan.

10. Liaison des tubes selon l'une des revendications précédentes,
**caractérisée en ce que**
les griffes de maintien (42) sont monoblocs avec la partie de serrage (2).

11. Liaison des tubes selon l'une des revendications précédentes,
**caractérisée en ce que**
les griffes de maintien (42) ne partent que d'un côté de la partie de serrage (2).
